# EUROPÄISCHE PATENTANMELDUNG

(11) **EP 4 520 968 A1**
(43) Veröffentlichungstag der Anmeldung: **12.03.2025**
(21) Anmeldenummer: 24189942.6
(22) Anmeldetag: 22.07.2024
(51) Int. Cl.: F04B 1/0408, F04B 1/0538, F04B 7/04, F04B 9/04

(54) **RADIALKOLBENPUMPE, VERFAHREN ZUM BETRIEB EINER RADIALKOLBENPUMPE UND LENKSYSTEM**

(30) Priorität: 06.09.2023 DE 102023123961
(71) Anmelder: Pump Technology Solutions PS GmbH, 13437 Berlin (DE)
(72) Erfinder: Senyuez, Ugur, 13437 Berlin (DE); Schlecker, Volker, 13437 Berlin (DE); Zischka, Ralf, 13437 Berlin (DE); Linek, Manuela, 13437 Berlin (DE)
(74) Vertreter: Lorenz, Markus

(57) **Zusammenfassung**

Die Erfindung betrifft eine Radialkolbenpumpe (1) zur Förderung eines Druckmittels zu einem Verbraucher (2), mit einem Gehäuse (3), in dem zu einer Längsachse (4) radial angeordnete Zylinderbohrungen (5) vorgesehen sind, in denen je ein radial verschiebbarer Kolben (6) angeordnet ist. Die Kolben (6) bilden eine in einer Radialebene liegende Kolbenreihe (7) aus. Des Weiteren weist die Radialkolbenpumpe (1) eine koaxial zu der Längsachse (4) angeordnete Exzenterwelle (8) auf, die die Kolben (6) in eine linear oszillierende Hubbewegung versetzt, wobei durch in den Kolben (6) ausgebildete Saugöffnungen (9) im Bereich eines unteren Totpunkts der Hubbewegung von einem Saugraum (10), welcher durch einen Sauganschluss (11) mit Druckmittel versorgt ist, Druckmittel in Zylinderräume (12) einströmt. Das Druckmittel strömt durch eine Bewegung der Kolben (6) zum oberen Totpunkt über Drucköffnungen (13) aus den Zylinderräumen (12) zu einem Druckausgang (14). Planparallel zu der Kolbenreihe (7) ist wenigstens eine weitere Kolbenreihe (15) vorgesehen. In dem Gehäuse (3) sind weitere Zylinderbohrungen (16) vorgesehen, in denen je ein Kolben (17) der weiteren Kolbenreihe (15) radial verschiebbar angeordnet ist. Die Exzenterwelle (8) versetzt die Kolben (17) der weiteren Kolbenreihe (15) in eine linear oszillierende Hubbewegung.

## Beschreibung

Die Erfindung betrifft eine Radialkolbenpumpe zur Förderung eines Druckmittels zu einem Verbraucher, mit einem Gehäuse, in dem zu einer Längsachse radial angeordnete Zylinderbohrungen vorgesehen sind, in denen je ein radial verschiebbarer Kolben angeordnet ist, gemäß dem Oberbegriff von Anspruch 1.

Die Erfindung betrifft ferner ein Verfahren zum Betrieb einer Radialkolbenpumpe zur Förderung eines Druckmittels zu einem Verbraucher gemäß dem Oberbegriff von Anspruch 12.

Des Weiteren betrifft die Erfindung ein Lenksystem für ein Fahrzeug, insbesondere für ein Nutzfahrzeug, mit wenigstens zwei lenkbaren Radachsen nach Anspruch 16.

Eine gattungsgemäße Radialkolbenpumpe zur Förderung eines Druckmittels ist aus der DE 10 2011 001 979 A1 bekannt.

Zum weiteren Stand der Technik sei ferner auf die DE 10 2011 053 145 A1 verwiesen.

Radialkolbenpumpen werden vielfältig in Kraftfahrzeugen eingesetzt und dienen z.B. als Schmiermittelpumpen für Verbrennungskraftmaschinen oder für Getriebe von Fahrzeugen, als Druckmittelpumpen für hydraulische Aktuatoren zur Bereitstellung einer Lenkhilfskraft oder zur Darstellung von Stellbewegungen an Kupplungen oder innerhalb eines aktiven Fahrwerkes eines Fahrzeugs. Radialkolbenpumpen werden im Vergleich zu Flügelzellenpumpen dann bevorzugt eingesetzt, wenn ein höheres Druckniveau an einem hydraulischen Verbraucher gewünscht ist.

Radialkolbenpumpen weisen ein Gehäuse auf, in dem radial zu einer Längsachse angeordnete Zylinderbohrungen vorgesehen sind. In jeder Zylinderbohrung ist jeweils ein verschiebbarer Kolben angeordnet. In der Regel wird bei Radialkolbenpumpen Druckmittel, wie etwa Hydrauliköl, über radial zu der jeweiligen Zylinderbohrung angeordnete Saugöffnungen in einen Verdrängungsraum bzw. Zylinderraum zwischen dem Kolben und der Zylinderbohrung angesaugt und aus vorzugsweise zentral zu jeder Zylinderbohrung angeordnete Drucköffnungen ausgestoßen. Hierbei sind Wandteile des Kolbens und Wandteile der Zylinderbohrung in Wechselwirkung.

Radialkolbenpumpen fördern Druckmittel somit diskontinuierlich in Teilvolumina pro Umdrehung eines Antriebsexzenters bzw. einer Exzenterwelle der bzw. die für die Verfahrbewegungen eines jeden Kolbens in der jeweiligen Zylinderbohrung sorgt.

Die DE 43 36 673 A beschreibt eine Radialkolbenpumpe, die eine Anzahl von in Zylinderbohrungen eines Pumpengehäuses eingesetzte Kolben aufweist, wobei jeder Kolben von einer Feder beaufschlagt wird, die sich an einem, die Zylinderbohrung verschließenden Stopfen abstützt.

Radialkolbenpumpen haben sich für vielfältige Anwendungen, insbesondere bei Fahrzeugen und vor allem auch bei Nutzfahrzeugen als vorteilhaft herausgestellt, gleichwohl wäre es wünschenswert, Radialkolbenpumpen weiter zu optimieren, um deren Einsatzmöglichkeiten zu erweitern.

Aus dem Stand der Technik sind Lenksysteme für Fahrzeuge, insbesondere für Nutzfahrzeuge und hierbei insbesondere für Nutzfahrzeuge im Bereich der Landwirtschaft, bekannt, die wenigstens zwei lenkbare Radachsen aufweisen. Die lenkbaren Radachsen werden dabei im Normalbetrieb jeweils durch eine elektrische und/oder hydraulische Lenkvorrichtung ausgelenkt, so dass das Nutzfahrzeug an zwei Achsen gelenkt bzw. gesteuert werden kann. Für derartige Fahrzeuge besteht ein Bedarf das Lenksystem derart auszubilden, dass zusätzlich zu der elektrischen und/oder hydraulischen Lenkvorrichtung, die im Normalbetrieb die Auslenkung der lenkbaren Radachsen, insbesondere die Auslenkung von Rädern der Radachsen, übernimmt, auch eine Notlenkfunktion gegeben ist. Hierzu ist es bekannt, dass jeder Achse eine Notlenkpumpe zugeordnet wird, die es ermöglicht, die lenkbaren Radachsen in einem Notfallbetrieb steuerbar bzw. lenkbar zu halten. Die Anordnung bzw. das Vorsehen von derartigen Notlenkpumpen, bei denen es sich um Radialkolbenpumpen handeln kann, verursacht entsprechende Kosten sowie einen entsprechenden Montage- und Wartungsaufwand.

Der vorliegenden Erfindung liegt die Aufgabe zugrunde, eine Radialkolbenpumpe zur Verfügung zu stellen, die gegenüber dem Stand der Technik verbessert ist, insbesondere eine verbesserte Funktionalität aufweist.

Diese Aufgabe wird erfindungsgemäß durch Anspruch 1 gelöst.

Der vorliegenden Erfindung liegt ferner die Aufgabe zugrunde, ein Verfahren zum Betrieb einer Radialkolbenpumpe bereitzustellen, welches gegenüber den bisherigen Verfahren verbessert ist, insbesondere eine verbesserte Funktionalität aufweist.

Diese Aufgabe wird erfindungsgemäß durch Anspruch 12 gelöst.

Der vorliegenden Erfindung liegt ferner die Aufgabe zugrunde, ein Lenksystem für ein Fahrzeug, insbesondere für ein Nutzfahrzeug mit wenigstens zwei lenkbaren Radachsen zu schaffen, bei dem die wenigstens zwei lenkbaren Radachsen auch in einem Notfallbetrieb weiterhin auslenkbar sind, wobei das Lenksystem einfach und kostengünstig realisierbar sowie einfach zu warten sein soll.

Diese Aufgabe wird erfindungsgemäß durch Anspruch 16 gelöst.

Die erfindungsgemäße Radialkolbenpumpe zur Förderung eines Druckmittels zu einem Verbraucher weist ein Gehäuse auf, in dem zu einer Längsachse radial angeordnete Zylinderbohrungen vorgesehen sind. In den Zylinderbohrungen ist je ein radial verschiebbarer Kolben angeordnet. Die Kolben bilden dabei eine in einer Radialebene liegende Kolbenreihe aus. Die Radialkolbenpumpe weist ferner eine koaxial zu der Längsachse angeordnete Exzenterwelle auf, die die Kolben in eine linear oszillierende Hubbewegung versetzt, wobei durch in den Kolben ausgebildete Saugöffnungen im Bereich eines unteren Totpunkts der Hubbewegung von einem Saugraum, welcher durch einen Sauganschluss mit Druckmittel versorgt ist, Druckmittel in Zylinderräume einströmt. Durch eine Bewegung der Kolben zum oberen Totpunkt strömt das Druckmittel über Drucköffnungen aus den Zylinderräumen zu einem Druckausgang.

Erfindungsgemäß ist vorgesehen, dass planparallel zu der Kolbenreihe wenigstens eine weitere Kolbenreihe angeordnet ist, wobei in dem Gehäuse weitere Zylinderbohrungen vorgesehen sind, in denen je ein Kolben der weiteren Kolbenreihe radial verschiebbar angeordnet ist, und wobei die Exzenterwelle die Kolben der weiteren Kolbenreihe in eine linear oszillierende Hubbewegung versetzt.

Die erfindungsgemäße Ausbildung der Radialkolbenpumpe derart, dass planparallel zu der Kolbenreihe, die bei herkömmlichen Radialkolbenpumpen vorgesehen ist und die im Rahmen der Erfindung teilweise auch als erste Kolbenreihe bezeichnet wird, wenigstens eine weitere Kolbenreihe vorgesehen ist, führt dazu, dass die Funktionalität bzw. die Einsatzmöglichkeiten einer derartigen Radialkolbenpumpe erweitert werden. Mithilfe der weiteren Kolbenreihe, die im Rahmen der Erfindung zur Unterscheidung teilweise auch als zweite Kolbenreihe bezeichnet wird, lässt sich ein zweiter Druckmittelstrom erzeugen, der bedarfsweise entweder dem ersten Druckmittelstrom, der von der ersten Kolbenreihe erzeugt wird, überlagert wird oder diesen ersetzt oder der dazu dient, dauerhaft oder bedarfsweise einen weiteren Verbraucher, der im Rahmen der Erfindung teilweise auch als zweiter Verbraucher bezeichnet wird, mit dem Druckmittel zu versorgen bzw. zu betreiben.

Die Realisierung einer weiteren Kolbenreihe lässt sich mit der erfindungsgemäßen Lösung einfach, verlässlich und kostengünstig dadurch realisieren, dass in dem Gehäuse weitere Zylinderbohrungen vorgesehen sind, in denen je ein Kolben der weiteren Kolbenreihe radial verschiebbar angeordnet ist. Somit kann die Exzenterwelle, die ohnehin vorgesehen ist, um die Kolben der ersten Kolbenreihe in eine linear oszillierende Hubbewegung zu versetzen, auch dazu verwendet werden, die Kolben der weiteren Kolbenreihe in eine linear oszillierende Hubbewegung zu versetzen.

Im Rahmen der Erfindung kann dabei auch vorgesehen sein, dass nicht nur eine weitere Kolbenreihe, sondern auch noch eine dritte, vierte oder noch weitere Kolbenreihen vorgesehen sein, die jeweils planparallel zu der ersten Kolbenreihe verlaufen, d. h. dass die Kolbenreihen jeweils in einer Radialebene, bezogen auf die Längsachse bzw. die Exzenterwelle, verlaufen.

Im Rahmen der Erfindung kann vorgesehen sein, dass die Kolben der weiteren Kolbenreihe versetzt bzw. um einen definierten Mittelpunktswinkel bzw. einen definierten Kreisbogen verschoben zu den Kolben der ersten Kolbenreihe angeordnet sind, wodurch ggf. die Laufruhe und/oder die Stabilität der Radialkolbenpumpe verbessert werden kann.

Im Rahmen der Erfindung ist vorgesehen, dass jede Kolbenreihe mindestens zwei Kolben aufweist, vorzugsweise sind zwei bis sechzehn Kolben, insbesondere vier bis zwölf Kolben und ganz besonders bevorzugt sechs bis zehn, insbesondere acht, Kolben, pro Kolbenreihe vorgesehen. Die Kolben einer Kolbenreihe sind dabei vorzugsweise mit einem gleichmäßigen Winkelabstand angeordnet.

Im Rahmen der Erfindung ist vorzugsweise vorgesehen, dass alle Kolbenreihen dieselbe Anzahl von Kolben aufweisen, vorzugsweise sechs bis zehn Kolben, insbesondere acht Kolben. Es ist, abhängig vom Anwendungsfall, jedoch auch denkbar, dass eine Kolbenreihe mehr Kolben aufweist, beispielsweise die erste Kolbenreihe, als die weitere Kolbenreihe.

Von Vorteil ist es, wenn die Exzenterwelle als Doppelexzenterwelle ausgebildet ist, mit wenigstens einem ersten Exzenterbereich, der die Kolben der Kolbenreihen in eine Hubbewegung versetzt, und wenigstens einem zweiten Exzenterbereich, der die Kolben der weiteren Kolbenreihen in eine Hubbewegung versetzt.

Es kann auch vorgesehen sein, dass die Exzenterwelle einen dritten, einen vierten oder weitere Exzenterbereiche aufweist. Es hat sich gezeigt, dass es von Vorteil sein kann, wenn die Exzenterbereiche, insbesondere der erste Exzenterbereich und der zweite Exzenterbereich, nicht identisch ausgebildet sind. Dadurch kann beispielsweise erreicht werden, dass der Hub der Kolben einer Kolbenreihe, beispielsweise der ersten Kolbenreihe, größer ist als der Hub der Kolben der weiteren Kolbenreihe, z. B. der zweiten Kolbenreihe, (oder umgekehrt).

Es kann jedoch auch vorgesehen sein, dass die Exzenterbereiche identisch ausgebildet sind, dies kann insbesondere der Fall sein, wenn ein gleichmäßiger Hub gewünscht ist, oder über andere Maßnahmen, beispielsweise einen Gleitring und/oder eine Gleitbuchse, die zwischen der Exzenterwelle bzw. einem Exzenterbereich der Exzenterwelle und den Kolben einer Kolbenreihe angeordnet ist, eine Änderung bzw. Einstellung des Hubs bzw. der Hubbewegung der Kolben erfolgt.

Im Rahmen der Erfindung kann auch vorgesehen sein, dass ein Gleitring und/oder eine Gleitbuchse den jeweiligen Exzenterbereich ausbilden.

Erfindungsgemäß kann ferner vorgesehen sein, dass durch in den Kolben der weiteren Kolbenreihe ausgebildete Saugöffnungen im Bereich eines unteren Totpunkts der Hubbewegung von dem Saugraum Druckmittel in Zylinderräume einströmt, und wobei das Druckmittel durch eine Bewegung der Kolben zum oberen Totpunkt über Drucköffnungen aus den Zylinderräumen ausströmt.

Es hat sich als vorteilhaft herausgestellt, wenn die Kolben der weiteren Kolbenreihe analog zu den Kolben der ersten Kolbenreihe angeordnet sind und insbesondere derselbe Saugraum verwendet wird, um in den jeweiligen Zylinderraum (bzw. den Verdrängerraum) Druckmittel einzusaugen.

Das Ausstoßen bzw. das Ausströmen des Druckmittels aus dem jeweiligen Zylinderraum erfolgt dabei ebenfalls durch Drucköffnungen, deren Anordnung bzw. Ausbildung aus dem Stand der Technik hinlänglich bekannt ist, wozu explizit auf die DE 10 2011 001 979 A1 verwiesen wird.

Es hat sich gezeigt, dass es von Vorteil ist, wenn die Zylinderbohrungen, in denen die Kolben der Kolbenreihen aufgenommen sind, auf ihren dem Exzenter zugewandten Seiten zu einem Saugabschnitt bzw. zum Saugraum hin offen und vorzugsweise auf ihren gegenüberliegenden Seiten mit jeweils einem, im Längsschnitt tropfenförmigen Verschlussstopfen druckdicht abgeschlossen sind. Selbstverständlich ist die Erfindung hierauf nicht beschränkt, es sind auch andere Gestaltungen vorteilhaft realisierbar. Insofern ein Verschlussstopfen vorgesehen ist, kann es von Vorteil sein, wenn sich auf der Innenseite eines jeden Verschlussstopfens ein Ende einer Schraubendruckfeder abstützt. Die Schraubendruckfeder kann sich dabei mit ihrem anderen Ende vorzugsweise an einem Boden des innen hohlen Kolbens abstützen und eine Druckkraft auf die Kolben aufbringen. Ein derartiger Aufbau, insbesondere auch unter Verwendung einer Schraubendruckfeder, kann sich auch unabhängig von der Ausbildung eines Verschlussstopfens eignen.

Es handelt sich hierbei um eine vorteilhafte konstruktive Ausgestaltung, die aus dem Stand der Technik bekannt ist und sich insbesondere auch für die erfindungsgemäße Radialkolbenpumpe eignen kann.

Es sei darauf hingewiesen, dass der Begriff Zylinderbohrung nicht bedeutet, dass die Herstellung durch ein bohrendes Verfahren erfolgen muss, die Herstellung der Zylinderbohrungen durch ein bohrendes Verfahren ist zwar von Vorteil, die Zylinderbohrungen können jedoch auch anderweitig zur Verfügung gestellt werden.

Erfindungsgemäß kann ferner vorgesehen sein, dass ein weiterer Druckausgang in dem Gehäuse ausgebildet ist und die Kolben der weiteren Kolbenreihe Druckmittel zu dem weiteren Druckausgang fördern.

Es hat sich als vorteilhaft herausgestellt, wenn ein weiterer Druckausgang in dem Gehäuse der Radialkolbenpumpe ausgebildet ist und die Kolben der weiteren Kolbenreihe Druckmittel zu dem weiteren Druckausgang fördern.

Grundsätzlich ist es auch möglich, dass die Kolben der weiteren Kolbenreihen das Druckmittel zu dem Druckausgang fördern, in den auch die Kolben der ersten Kolbenreihe das von diesen geförderte Druckmittel ausstoßen.

Insofern mehr als eine weitere Kolbenreihe vorgesehen ist, können gegebenenfalls auch noch weitere Druckausgänge, z.B. ein dritter Druckausgang und ein vierter Druckausgang, vorgesehen sein.

Erfindungsgemäß kann ferner vorgesehen sein, dass der Druckausgang mit einem ersten Verbraucher und der weitere Druckausgang mit einem zweiten Verbraucher verbunden ist, um Druckmittel von dem jeweiligen Druckausgang zu dem jeweils verbundenen Verbraucher zu fördern.

Dadurch, dass der weitere Druckausgang, der auch als zweiter Druckausgang bezeichnet werden kann, mit einem zweiten Verbraucher verbunden ist, lässt sich in besonders vorteilhafter Weise ein weiterer bzw. ein zweiter Druckmittelstrom bzw. Druckmittelkreislauf herstellen.

In einer alternativen, ebenfalls erfindungsgemäßen Ausgestaltung kann auch vorgesehen sein, dass der Druckausgang und der weitere Druckausgang mit demselben Verbraucher verbunden sind, um Druckmittel zu demselben Verbraucher zu fördern.

Auch eine derartige Ausgestaltung hat sich als geeignet herausgestellt.

Von Vorteil ist es, wenn eine Steuereinrichtung vorgesehen ist, um bedarfsweise Druckmittel von nur einem oder von beiden Druckausgängen zum demselben Verbraucher zu fördern.

Die Steuereinrichtung kann derart eingerichtet sein, dass diese bedarfsweise nur das von der ersten Kolbenreihe geförderte Druckmittel oder nur das von der weiteren Kolbenreihe geförderte Druckmittel zu demselben Verbraucher fördert.

Dadurch kann beispielsweise erreicht werden, dass, wenn der Verbraucher nur einen geringen Druckmittelstrom bzw. nur ein geringes Volumen an Druckmittel erfordert, der Verbraucher nur von einer Kolbenreihe, vorzugsweise von der Kolbenreihe mit Druckmittel versorgt wird, die ein geringeres Volumen fördert. Es kann vorgesehen sein, dass die Kolben der anderen Kolbenreihe ausgelegt sind, um ein höheres Volumen zu fördern. Bedarfsweise kann somit die Steuereinrichtung den Verbraucher mit einem geeigneten bzw. optimierten Druckmittelstrom aus der einen oder der anderen Kolbenreihe versorgen. Gegebenenfalls kann auch vorgesehen sein, dass dem Verbraucher das von beiden Kolbenreihen geförderte Druckmittel zugeführt wird, insbesondere wenn ein besonders hoher Bedarf besteht.

Eine derartige Steuerung kann sich insbesondere eignen, wenn die beiden Kolbenreihen ein unterschiedliches Volumen fördern oder das von den beiden Kolbenreihen stammende Druckmittel mit einem unterschiedlichen Druck zu dem Verbraucher gelangt. Eine derartige Ausgestaltung kann sich jedoch auch eignen, wenn beide Kolbenreihen identisch ausgebildet sind bzw. ein identisches Volumen des Druckmittels fördern.

Die Kolbenreihen können im Rahmen der Erfindung ein identisches oder ein unterschiedliches geometrisches Fördervolumen aufweisen.

Erfindungsgemäß kann vorgesehen sein, dass die Kolbenreihen derart ausgebildet sind, dass sich das Volumen des Druckmittels, das die Kolbenreihe bei einer Rotation der Exzenterwelle fördert, von dem Volumen, das die weitere Kolbenreihe fördert, unterscheidet und/oder die Radialkolbenpumpe derart ausgebildet ist, dass der Druck des von der Kolbenreihe stammenden Druckmittels unterschiedlich ist zu dem Druck des von der weiteren Kolbenreihe stammenden Druckmittels.

Es hat sich als vorteilhaft herausgestellt, wenn die Kolbenreihen ein unterschiedliches Volumen fördern und/oder das von den Kolbenreihen stammende Druckmittel bzw. der entsprechende Druckmittelstrom einen unterschiedlichen Druck aufweist.

Eine derartige Ausbildung kann sich sowohl eigenen, wenn die Kolbenreihen das Druckmittel demselben Verbraucher zuführen als auch, wenn die Kolbenreihen unterschiedliche Verbraucher mit dem Druckmittel beaufschlagen. Speziell im zweiten Fall kann durch ein unterschiedliches Volumen des Druckmittels oder einen unterschiedlichen Druck des Druckmittels auf die spezifischen Gegebenheiten des jeweiligen Verbrauchers eingegangen werden, ohne dass hierfür eine zweite Radialkolbenpumpe notwendig wäre.

Von Vorteil ist es, wenn für jede Kolbenreihe ein eigener Gleitring vorgesehen ist, wobei die Gleitringe jeweils zwischen der Exzenterwelle und der jeweiligen Kolbenreihe angeordnet sind.

Die Gleitringe können dabei unmittelbar auf der Exzenterwelle angeordnet sein. Insbesondere können die Gleitringe unmittelbar auf den jeweiligen Exzenterbereichen der Exzenterwelle angeordnet sein. Die Gleitringe können vorzugsweise unmittelbar oder mittelbar auf einen Boden der Kolben der jeweiligen Kolbenreihe einwirken.

Ein Vorteil des Gleitrings besteht darin, dass neben den verbesserten Gleiteigenschaften auch der Hub der Kolben der jeweiligen Kolbenreihe in einfacher Weise variiert werden kann, ohne dass die Exzenterwelle verändert werden muss. Dies ermöglicht es unter anderem, dass für verschiedene Radialkolbenpumpen baugleiche Exzenterwellen verwendet werden können und der Hub der Kolben durch den auf die Exzenterwelle aufgebrachten Gleitring angepasst werden kann.

Im Rahmen der erfindungsgemäßen Radialkolbenpumpe ermöglichen die Gleitringe insbesondere, dass die Exzenterbereiche der Kolbenreihen identisch ausgebildet sein können und ein unterschiedlicher Hub durch unterschiedliche Gleitringe eingestellt werden kann.

Von Vorteil ist es, wenn der Gleitring der Kolbenreihe eine von dem Gleitring der weiteren Kolbenreihe unterschiedliche Stärke in Radialrichtung aufweist.

Es kann alternativ oder ergänzend zu dem Gleitring auch eine Gleitbuchse vorgesehen ist.

Erfindungsgemäß kann ferner vorgesehen sein, dass die Radialkolbenpumpe als Notlenkpumpe für ein Fahrzeug, insbesondere ein

Nutzfahrzeug, ausgebildet ist, wobei die Kolbenreihe eingerichtet ist, um Druckmittel zu einem Radlenkgetriebe oder einem Lenkzylinder eines Lenksystems einer ersten Radachse zu fördern, und die weitere Kolbenreihe eingerichtet ist, um Druckmittel zu einem Radlenkgetriebe oder einem Lenkzylinder eines Lenksystems einer zweiten Radachse zu fördern.

Es hat sich als besonders geeignet herausgestellt, wenn die Radialkolbenpumpe als Notlenkpumpe für ein Fahrzeug, insbesondere ein Nutzfahrzeug, vorzugsweise ein landwirtschaftlich genutztes Nutzfahrzeug, ausgebildet ist. Es hat sich gezeigt, dass speziell bei Nutzfahrzeugen, die über zwei lenkbare Radachsen verfügen, ein Bedarf besteht, Notlenkpumpen einzusetzen. Dabei wird im Stand der Technik für jede Radachse eine eigenständige Notlenkpumpe verwendet, die dazu dient, die Radachse auszulenken, wenn die hierfür eigentlich vorgesehene Lenkvorrichtung (elektrisch und/oder hydraulisch) des Lenksystems eine Störung hat bzw. Unterstützung benötigt.

Die Funktion von Notlenkpumpen ist grundsätzlich aus dem Stand der Technik bekannt, insbesondere auch um lenkbare Radachse auszulenken. Hierzu ist in der Regel vorgesehen, dass die Räder der Radachsen ausgelenkt werden. Es kann vorgesehen sein, ein Radlenkgetriebe mit Druckmittel der Notlenkpumpe zu beaufschlagen ist oder es gilt, einen Lenkzylinder des Lenksystems bzw. der Lenkvorrichtung mit Druckmittel zu beaufschlagen.

Eine Verwendung der erfindungsgemäßen Radialkolbenpumpe als Notlenkpumpe eignet sich in ganz besonderer Weise, da dadurch erhebliche Kosten eingespart werden können, ohne einen Nachteil bei der Funktionalität befürchten zu müssen. Ferner wird auch der Wartungsaufwand und der Montageaufwand reduziert.

Die vorliegende Erfindung betrifft auch ein Verfahren zum Betrieb einer Radialkolbenpumpe zur Förderung eines Druckmittels zu einem Verbraucher, wobei die Radialkolbenpumpe ein Gehäuse aufweist, in dem zu einer Längsachse radial angeordnete Zylinderbohrungen vorgesehen sind, in denen je ein radial verschiebbarer Kolben angeordnet ist, wobei die Kolben eine in einer Radialebene liegende Kolbenreihe ausbilden, und wobei die Kolben durch eine koaxial zu der Längsachse angeordnete Exzenterwelle in eine linear oszillierende Hubbewegung versetzt werden, und wobei durch Saugöffnungen der Kolben im Bereich eines unteren Totpunkts der Hubbewegung von einem Saugraum, welcher durch einen Sauganschluss mit Druckmittel versorgt wird, durch einen Unterdruck, der aufgrund der Bewegung der Kolben zum unteren Totpunkt entstanden ist, Druckmittel in Zylinderräume einströmt, und wobei das Druckmittel bei der Bewegung der Kolben zum oberen Totpunkt über Drucköffnungen zu einem Druckausgang gefördert wird.

Erfindungsgemäß wird im Rahmen des Verfahrens planparallel zu der Kolbenreihe wenigstens eine weitere Kolbenreihe vorgesehen. In dem Gehäuse werden hierzu weitere Zylinderbohrungen vorgesehen, in denen je ein Kolben der weiteren Kolbenreihe radial verschiebbar angeordnet wird. Die Kolben der weiteren Kolbenreihe werden durch die Exzenterwelle in eine linear oszillierende Hubbewegung versetzt. Das von der Kolbenreihe und der weiteren Kolbenreihe geförderte Druckmittel wird demselben Verbraucher zugeführt oder das von der Kolbenreihe geförderte Druckmittel wird einem ersten Verbraucher und das von der weiteren Kolbenreihe geförderte Druckmittel wird einem zweiten Verbraucher zugeführt.

Das erfindungsgemäße Verfahren zum Betrieb einer Radialkolbenpumpe ermöglicht es in besonders vorteilhafter Weise entweder einem bzw. demselben Verbraucher Druckmittel aus der Kolbenreihe und der wenigstens einen weiteren Kolbenreihen, bzw. aus beiden Kolbenreihen zuzuführen oder zwei Verbraucher, d. h. einen ersten Verbraucher und einen zweiten Verbraucher, durch jeweils eine Kolbenreihe mit Druckmittel zu versorgen. Durch den erfindungsgemäßen Betrieb der Radialkolbenpumpe kann die Radialkolbenpumpe somit eine höhere Funktionalität erfüllen. Der Aufbau der Radialkolbenpumpe ist dabei besonders vorteilhaft, einfach, kostengünstig und robust zu realisieren. Hinsichtlich weiterer Vorteile wird insbesondere auf die vorstehenden Ausführungen und auch die nachfolgenden Ausführungen zu der Radialkolbenpumpe verwiesen.

Von Vorteil ist es, wenn bei einer Förderung des Druckmittels zu demselben Verbraucher vorgesehen wird, dass dem Verbraucher bedarfsweise nur das von der ersten Kolbenreihe geförderte Druckmittel oder nur das von der weiteren Kolbenreihe geförderte Druckmittel oder das von beiden Kolbenreihen geförderte Druckmittel zugeführt wird.

Erfindungsgemäß kann ferner im Rahmen des Verfahrens vorgesehen sein, dass sich das Volumen des Druckmittels, das die Kolbenreihe bei einer Rotation der Exzenterwelle fördert, von dem Volumen, das die weitere Kolbenreihe fördert, unterscheidet und/oder der Druck des von der Kolbenreihe stammenden Druckmittels unterschiedlich ist zu dem Druck des von der weiteren Kolbenreihe stammenden Druckmittels.

Das erfindungsgemäße Verfahren ermöglicht es somit, mit einer Radialkolbenpumpe zwei unterschiedliche Verbraucher mit unterschiedlichem Druck und/oder Volumen des Druckmittels zu bedienen bzw. zu beaufschlagen bzw. den Druckmittelstrom entsprechend einzustellen. Das erfindungsgemäße Verfahren ermöglicht es auch demselben Verbraucher bedarfsweise mit unterschiedlichem Druck und/oder Volumen des Druckmittels zu bedienen bzw. zu beaufschlagen bzw. den Druckmittelstrom entsprechend einzustellen.

Erfindungsgemäß kann ferner im Rahmen des Verfahrens vorgesehen sein, dass bei einem Betrieb der Radialkolbenpumpe derart, dass das von der Kolbenreihe geförderte Druckmittel einem ersten Verbraucher und das von der weiteren Kolbenreihe geförderte Druckmittel einem zweiten Verbraucher zugeführt wird, der erste Verbraucher eine erste lenkbare Radachse und der zweite Verbraucher eine zweite lenkbare Radachse eines Nutzfahrzeugs ist, vorzugsweise wird vorgesehen, dass die Radialkolbenpumpe als Notlenkpumpe ausgebildet wird, wobei der erste Verbraucher ein Radlenkgetriebe oder ein Lenkzylinder einer Lenkvorrichtung der ersten Radachse ist und der zweite Verbraucher ein Radlenkgetriebe oder ein Lenkzylinder einer Lenkvorrichtung der zweiten Radachse ist.

Das erfindungsgemäße Verfahren eignet sich in besonderer Weise zur Versorgung eines ersten Verbrauchers und eines zweiten Verbrauchers. In ganz besonderer Weise eignet sich das erfindungsgemäße Verfahren, wenn es sich bei den beiden Verbrauchern um eine erste lenkbare Radachse bzw. eine zweite lenkbare Radachse handelt und die Radialkolbenpumpe als Notlenkpumpe dient.

Die vorliegende Erfindung betrifft auch ein Lenksystem für ein Fahrzeug, insbesondere für ein Nutzfahrzeug mit wenigstens zwei lenkbaren Radachsen, die im Normalbetrieb mit jeweils einer elektrischen und/oder hydraulischen Lenkvorrichtung auslenkbar sind. Das Lenksystem weist dabei zusätzlich eine Notlenkpumpe auf, welche erfindungsgemäß als Radialkolbenpumpe nach einem der Ansprüche 1 bis 11 ausgebildet ist und/oder die nach einem Verfahren gemäß einem der Ansprüche 12 bis 15 betrieben wird. Bei dem erfindungsgemäßen Lenksystem sind Druckleitungen vorgesehen, um ein von der Kolbenreihe gefördertes Druckmittel einem Radlenkgetriebe oder einem Lenkzylinder einer Lenkvorrichtung der ersten Radachse zuzuführen. Ferner sind weitere Druckleitungen vorgesehen, um ein von der weiteren Kolbenreihe gefördertes Druckmittel einem Radlenkgetriebe oder einem Lenkzylinder einer Lenkvorrichtung der zweiten Radachse zuzuführen.

Ein derart ausgebildetes Lenksystem, insbesondere für Nutzfahrzeuge, vorzugsweise für landwirtschaftliche Nutzfahrzeuge, hat sich als besonders geeignet herausgestellt. Mit einem derartigen Lenksystem lässt sich in einfacher und kostengünstiger Weise eine Notlenkfunktion realisieren. Hierzu ist es ausreichend, wenn die Notlenkpumpe als Radialkolbenkolbenpumpe ausgebildet und erfindungsgemäß ausgestaltet ist. Der Einsatz von zwei Radialkolbenpumpen ist nicht notwendig. Dadurch reduzieren sich die Kosten und der Montageaufwand signifikant. Ferner wird auch das Gewicht des Nutzfahrzeugs und es werden die Wartungs- und Reparaturaufwendungen reduziert.

Es sei darauf hingewiesen, dass die Formulierung Druckleitungen nicht bedeutet, dass mehrere Druckleitungen zu dem jeweiligen Verbraucher vorgesehen sein müssen, es kann gegebenenfalls auch nur eine Druckleitung ausreichend sein, die zu dem Verbraucher führt.

Merkmale, die im Zusammenhang mit einem der Gegenstände der Erfindung, namentlich gegeben durch die erfindungsgemäße Radialkolbenpumpe, das erfindungsgemäße Verfahren zum Betrieb einer Radialkolbenpumpe oder das erfindungsgemäße Lenksystem, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Nachfolgend werden Ausführungsbeispiele der Erfindung anhand der Zeichnung näher beschrieben.

Es zeigt:
- Figur 1: einen Querschnitt durch eine mögliche Ausführungsform einer Radialkolbenpumpe; und
- Figur 2: eine schematische Darstellung der Versorgung von zwei Verbrauchern durch eine erfindungsgemäße Radialkolbenpumpe.

Radialkolbenpumpen und deren grundsätzliche Funktionsweise sind aus dem Stand der Technik hinlänglich bekannt, wozu insbesondere auf die gattungsgemäße Schrift, die DE 10 2011 001 979 A1 verwiesen wird.

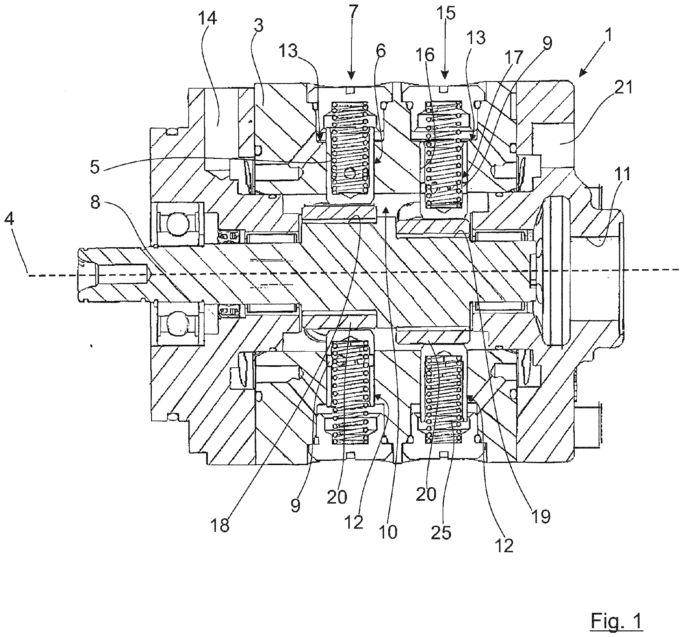

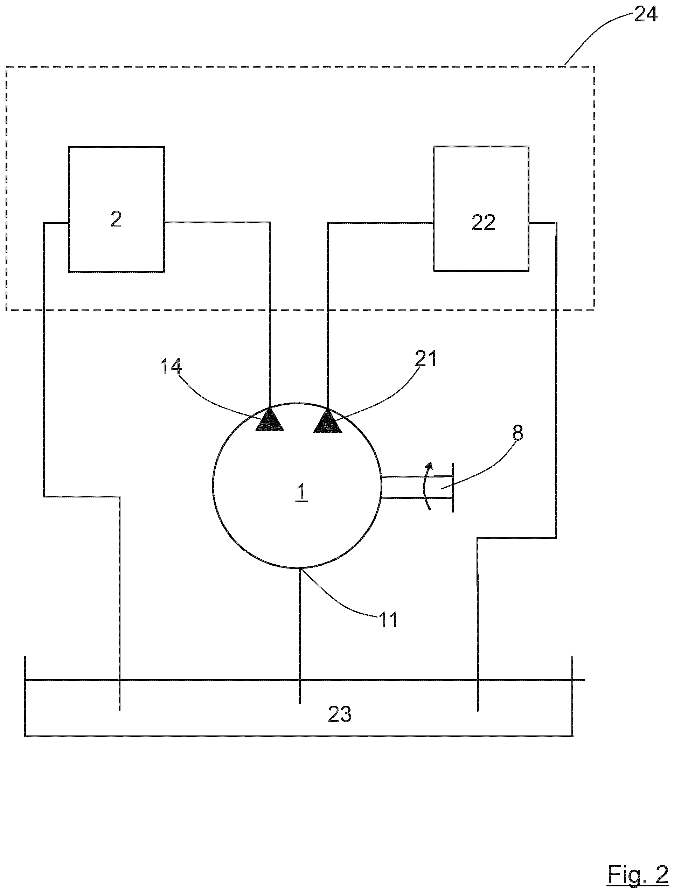

Wie aus den Figuren 1 und 2 ersichtlich ist, weist die erfindungsgemäße Radialkolbenpumpe 1 zur Förderung eines Druckmittels zu einem Verbraucher 2, der nachfolgend auch als erster Verbraucher 2 bezeichnet wird, ein Gehäuse 3 auf, in dem zu einer Längsachse 4 mehrere radial angeordnete Zylinderbohrungen 5 vorgesehen sind.

Im Ausführungsbeispiel sind sechs bis zehn, vorzugsweise acht, Zylinderbohrungen 5 vorgesehen. In jeder der Zylinderbohrungen 5 ist ein radial verschiebbarer Kolben 6 angeordnet. Die Kolben 6 bilden dabei eine in einer Radialebene liegende Kolbenreihe 7 aus. Die Radialebene bezieht sich dabei auf die Längsachse 4. Die Kolbenreihe 7 wird im Ausführungsbeispiel auch als erste Kolbenreihe 7 bezeichnet.

Die Radialkolbenpumpe 1 weist ferner eine koaxial zu der Längsachse 4 angeordnete Exzenterwelle 8 auf, die die Kolben 6 in eine linear oszillierende Hubbewegung versetzt. Durch im Kolben 6 ausgebildete Saugöffnungen 9 wird, wenn sich der Kolben 6 im Bereich eines unteren Totpunkts der Hubbewegung befindet, von einem Saugraum 10, welcher durch einen Sauganschluss 11 mit Druckmittel versorgt ist, Druckmittel in einen Zylinderraum 12 eingesaugt. Der Zylinderraum 12 kann dabei auch als Verdrängerraum bezeichnet werden.

Durch eine Bewegung der Kolben 6 zum oberen Totpunkt wird das Druckmittel über Drucköffnungen 13 aus dem Zylinderraum 12 zu einem Druckausgang 14 ausgepresst bzw. strömt in Richtung zu dem Druckausgang 14. Abweichend von der Bauart herkömmlicher Radialkolbenpumpen weist die erfindungsgemäße Radialkolbenpumpe 1, wie im Ausführungsbeispiel exemplarisch dargestellt, planparallel zu der ersten Kolbenreihe 7 wenigstens eine weitere Kolbenreihe 15 auf. Die weitere Kolbenreihe 15 wird auch als zweite Kolbenreihe 15 bezeichnet. In dem Gehäuse 3 sind weitere Zylinderbohrungen 16 vorgesehen, in denen je ein Kolben 17 der weiteren Kolbenreihe 15 radial verschiebbar angeordnet ist. Die Exzenterwelle 8 versetzt die Kolben 17 der weiteren Kolbenreihe 15 in eine linear oszillierende Hubbewegung.

Es sei darauf hingewiesen, dass die im Ausführungsbeispiel dargestellte Radialkolbenpumpe 1 zwar besonders vorteilhaft ist, gleichwohl sind auch Abweichungen möglich. Insbesondere können auch noch eine dritte Kolbenreihe oder eine vierte Kolbenreihe oder noch weitere Kolbenreihen vorgesehen sein, die vorzugsweise von der Bauart her identisch mit der ersten Kolbenreihe 7 bzw. der zweiten Kolbenreihe 15 sind.

Im Ausführungsbeispiel ist vorgesehen, dass die zweite Kolbenreihe 15 ebenfalls sechs bis zehn, vorzugsweise acht, Kolben 17 aufweist, d. h. dass auch eine entsprechende Anzahl an Zylinderbohrungen 16 vorgesehen ist.

Im Ausführungsbeispiel ist ferner vorgesehen, dass durch in den Kolben 17 ausgebildete Saugöffnungen 9 im Bereich eines unteren Totpunkts der Hubbewegung von dem Saugraum 10 Druckmittel in einen Zylinderraum 12 einströmt. Bei einer Bewegung der Kolben 17 zum oberen Totpunkt strömt dabei das Druckmittel über Drucköffnungen 13 aus dem Zylinderraum 12 wieder aus bzw. wird ausgepresst.

Der Aufbau der Zylinderbohrungen 16 und der Kolben 17 kann vorzugsweise mit dem Aufbau der Zylinderbohrungen 5 und der Kolben 6 identisch sein.

Im Ausführungsbeispiel kann vorgesehen sein, dass die Zylinderbohrungen 5 bzw. die Kolben 6 einen anderen Durchmesser und/oder eine andere Länge aufweisen als die Zylinderbohrungen 16 bzw. die Kolben 17.

Im Ausführungsbeispiel ist die Exzenterwelle 8 als Doppelexzenterwelle ausgebildet. Die Exzenterwelle 8 weist dabei einen ersten Exzenterbereich 18 auf, der, wenn die Exzenterwelle rotiert, die Kolben 6 der ersten Kolbenreihe 7 in eine Hubbewegung versetzt. Ferner weist die Exzenterwelle 8 einen zweiten Exzenterbereich 19 auf, der die Kolben 17 der zweiten Kolbenreihe 15 in eine Hubbewegung versetzt.

Wie aus Figur 1 ferner ersichtlich ist, ist für jede Kolbenreihe 7, 15 ein eigener Gleitring 20 vorgesehen. Im Ausführungsbeispiel sind die Gleitringe 20 dabei auf der Exzenterwelle 8, genauer auf dem ersten Exzenterbereich 18 bzw. dem zweiten Exzenterbereich 19, angeordnet. Die Gleitringe 20 befinden sich zwischen der Exzenterwelle 8 bzw. den Exzenterbereichen 18, 19 und der jeweiligen Kolbenreihe 7 bzw. 15.

Im Ausführungsbeispiel sind die beiden Gleitringe 20 mit einer identischen Stärke in Radialrichtung dargestellt. Es kann jedoch auch vorgesehen sein, dass die Gleitringe 20 eine unterschiedliche Stärke in Radialrichtung aufweisen.

Wie aus Figur 1 ersichtlich ist, weist die Radialkolbenpumpe 1 einen weiteren Druckausgang 21 auf, der in dem Gehäuse 3 ausgebildet ist. Der weitere Druckausgang 21, der auch als zweiter Druckausgang 21 bezeichnet werden kann, wird von den Kolben 17 der zweiten Kolbenreihe 15 mit Druckmittel versorgt.

Im Ausführungsbeispiel kann vorgesehen sein, dass der Druckausgang 14, der auch als erster Druckausgang 14 bezeichnet werden kann, und der zweite Druckausgang 21 dazu dienen, Druckmittel zu demselben Verbraucher 2 zu fördern.

Im Ausführungsbeispiel dargestellt ist jedoch eine Ausgestaltung, bei der vorgesehen ist, dass der erste Druckausgang 14 mit dem ersten Verbraucher 2 und der zweite Druckausgang 21 mit einem zweiten Verbraucher 22 verbunden ist. Somit kann von dem jeweiligen Druckausgang 14, 21 Druckmittel zu dem jeweils verbundenen Verbraucher 2 bzw. 22 gefördert werden.

Im Ausführungsbeispiel kann vorgesehen sein, dass die Kolbenreihen 7, 15 derart ausgebildet sind, dass sich das Volumen des Druckmittels, das die erste Kolbenreihe 7 bei einer Rotation der Exzenterwelle 8 fördert, von dem Volumen, das die zweite Kolbenreihe 15 fördert, unterscheidet. Alternativ und/oder ergänzend kann auch vorgesehen sein, dass die Radialkolbenpumpe 1 derart ausgebildet ist, dass der Druck des von der ersten Kolbenreihe 7 stammenden Druckmittels unterschiedlich ist zu dem Druck des von der weiteren/zweiten Kolbenreihe 15 stammenden Druckmittels.

Im Ausführungsbeispiel ist zur Vereinfachung vorgesehen, dass die Kolbenreihen 7, 15 die Verbraucher 2, 22 bei konstanter Rotation der Exzenterwelle jeweils mit demselben Volumen und demselben Druck des Druckmittels versorgen bzw. beaufschlagen. Es bietet sich allerdings, in Abhängigkeit der Verbraucher 2, 22 an, ein unterschiedliches Volumen bzw. einen unterschiedlichen Druck für die jeweiligen Verbraucher 2, 22 zu wählen.

Das vorliegende Ausführungsbeispiel dient auch zur Offenbarung des erfindungsgemäßen Verfahrens zum Betrieb einer Radialkolbenpumpe 1.

Der Betrieb der Radialkolbenpumpe 1 eignet sich dabei insbesondere, wenn es sich bei dem ersten Verbraucher 2 um eine erste lenkbare Radachse und bei dem zweiten Verbraucher 22 um eine zweite lenkbare Radachse eines nicht näher dargestellten Nutzfahrzeugs handelt, insbesondere eines landwirtschaftlichen Nutzfahrzeugs. Grundsätzlich kann es sich dabei auch allgemein um ein Fahrzeug handeln.

Das erfindungsgemäße Verfahren eignet sich in ganz besonderer Weise, wenn die Radialkolbenpumpe 1 als Notlenkpumpe ausgebildet ist, wobei der erste Verbraucher 2 ein Radlenkgetriebe oder ein Lenkzylinder einer Lenkvorrichtung der ersten Radachse und der zweite Verbraucher 22 ein Radlenkgetriebe oder ein Lenkzylinder einer Lenkvorrichtung der zweiten Radachse sein kann.

In Figur 2 ist ein Kreislauf der Radialkolbenpumpe 1 dargestellt, wobei von einem Druckausgang 14 Druckmittel zu einem ersten Verbraucher 2 und von dort zurück zu einem Druckmittelreservoir 23 strömt. Von dem zweiten Druckausgang 21 wird dabei Druckmittel zu dem zweiten Verbraucher 22 und von dort zurück wiederum in das Druckmittelreservoir 23 gefördert. In Figur 2 ist exemplarisch auch noch eine Antriebswelle bzw. die Exzenterwelle 8 dargestellt.

In Figur 2 ist ebenfalls dargestellt, dass es sich bei den Verbrauchern 2, 22 um Teile eines Lenksystems 24 handeln kann.

Das Ausführungsbeispiel dient auch zur Offenbarung eines beispielhaften Lenksystems 24 für ein Fahrzeug, insbesondere für ein Nutzfahrzeug und ganz besonders für ein landwirtschaftlich genutztes Nutzfahrzeug, mit wenigstens zwei lenkbaren Radachsen, bei denen es sich im Ausführungsbeispiel nach Figur 2 um die Verbraucher 2, 22 handeln kann. In nicht näher dargestellter Weise können die zwei lenkbaren Radachsen im Normalbetrieb jeweils mit einer elektrischen und/oder hydraulischen Lenkvorrichtung, die Teil des Lenksystems 24 ist, ausgelenkt werden.

Die Radialkolbenpumpe 1 dient dabei als Notlenkpumpe, welche erfindungsgemäß ausgebildet ist und/oder nach dem erfindungsgemäßen Verfahren betrieben wird.

Im Rahmen des Lenksystems 24 sind Druckleitungen vorgesehen, um ein von der ersten Kolbenreihe 7 gefördertes Druckmittel einem Radlenkgetriebe oder einem Lenkzylinder einer Lenkvorrichtung der ersten Radachse (= Verbraucher 2) zuzuführen. Ferner können weitere Druckleitungen vorgesehen sein, um ein von der zweiten Kolbenreihe 15 gefördertes Druckmittel einem Radlenkgetriebe oder einem Lenkzylinder einer Lenkvorrichtung der zweiten Radachse (= Verbraucher 22) zuzuführen.

Bei der in Figur 1 dargestellten Radialkolbenpumpe 1 handelt es sich vorzugsweise um eine sauggeregelte Radialkolbenpumpe in zweireihiger Ausführung. Die radial angeordneten Kolben 6, 17 werden durch die gemeinsame, rotierende Doppelexzenterwelle 8 in Verbindung mit Federn 25 im Kolben 6, 17 in eine linear oszillierende Hubbewegung versetzt. Im unteren Totpunkt der Hubbewegung tauchen die vorzugsweise radialen Saugöffnungen, bei denen es sich um Saugbohrungen handeln kann, im Kolben 6 bzw. 17 in den Saugraum 10, der auch als Exzenterraum bezeichnet werden kann, ein. Durch den im Zylinderraum 12 aufgrund der Bewegung der Kolben 6, 17 zum unteren Totpunkt entstandenen Unterdruck strömt beim Öffnen der vorzugsweise radialen Saugöffnungen 9 Druckmittel in den Zylinderraum 12. Bei dem Druckmittel handelt es sich vorzugsweise um ein Hydraulikfluid, insbesondere ein Öl.

Das Druckmittel wird bei der Bewegung der Kolben 6, 17 zum oberen Totpunkt über die Drucköffnungen 13, die auch als Auslassbohrungen bezeichnet werden können, und vorzugsweise vorgesehene (nicht näher bezeichnete) Rückschlagventile zum Druckausgang 14 bzw. 21 gefördert. Jeder der Druckausgänge 14, 21 ist mit einer Kolbenreihe 7, 15 verbunden. Dies ermöglicht die Versorgung separater Verbraucher 2, 22 mit Druckmittel. Das Prinzip der Saugregelung ermöglicht, durch geeignete Kombinationen von Kolben 6, 17, Gleitring 20 und der Exzentrität der Exzenterwelle 8 variable Fördermengen des Druckmittels. Dadurch ist es möglich, unterschiedliche Fördermengen für die jeweiligen Kreise zu realisieren. Durch den gemeinsamen Antrieb, die Exzenterwelle 8, und den Sauganschluss 11 ist eine flexible Zweikreisigkeit bei kompakter Bauweise möglich.

### Bezugszeichenliste

- 1: Radialkolbenpumpe
- 2: (erster) Verbraucher
- 3: Gehäuse
- 4: Längsachse
- 5: Zylinderbohrung
- 6: Kolben
- 7: (erste) Kolbenreihe
- 8: Exzenterwelle
- 9: Saugöffnungen
- 10: Saugraum
- 11: Sauganschluss
- 12: Zylinderraum
- 13: Drucköffnungen
- 14: (erster) Druckausgang
- 15: (weitere/zweite) Kolbenreihe
- 16: (weitere) Zylinderbohrungen
- 17: (weitere) Kolben (von 15)
- 18: erster Exzenterbereich
- 19: zweiter Exzenterbereich
- 20: Gleitring
- 21: (weiterer/zweiter) Druckausgang
- 22: (zweiter) Verbraucher
- 23: Druckmittelreservoir
- 24: Lenksystem
- 25: Federn
- Q: Volumen
- P: Druck

## Patentansprüche

1. Radialkolbenpumpe (1) zur Förderung eines Druckmittels zu einem Verbraucher (2), mit einem Gehäuse (3), in dem zu einer Längsachse (4) radial angeordnete Zylinderbohrungen (5) vorgesehen sind, in denen je ein radial verschiebbarer Kolben (6) angeordnet ist, wobei die Kolben (6) eine in einer Radialebene liegende Kolbenreihe (7) ausbilden, und mit einer koaxial zu der Längsachse (4) angeordneten Exzenterwelle (8), die die Kolben (6) in eine linear oszillierende Hubbewegung versetzt, wobei durch in den Kolben (6) ausgebildete Saugöffnungen (9) im Bereich eines unteren Totpunkts der Hubbewegung von einem Saugraum (10), welcher durch einen Sauganschluss (11) mit Druckmittel versorgt ist, Druckmittel in Zylinderräume (12) einströmt, und wobei das Druckmittel durch eine Bewegung der Kolben (6) zum oberen Totpunkt über Drucköffnungen (13) aus den Zylinderräumen (12) zu einem Druckausgang (14) strömt,
**dadurch gekennzeichnet, dass**
planparallel zu der Kolbenreihe (7) wenigstens eine weitere Kolbenreihe (15) vorgesehen ist, wobei in dem Gehäuse (3) weitere Zylinderbohrungen (16) vorgesehen sind, in denen je ein Kolben (17) der weiteren Kolbenreihe (15) radial verschiebbar angeordnet ist, und wobei die Exzenterwelle (8) die Kolben (17) der weiteren Kolbenreihe (15) in eine linear oszillierende Hubbewegung versetzt.

2. Radialkolbenpumpe nach Anspruch 1,
**dadurch gekennzeichnet, dass**
die Exzenterwelle (8) als Doppelexzenterwelle ausgebildet ist, mit wenigstens einem ersten Exzenterbereich (18), der die Kolben (6) der Kolbenreihe (7) in eine Hubbewegung versetzt, und wenigstens einem zweiten Exzenterbereich (19) der die Kolben (17) der weiteren Kolbenreihe (15) in eine Hubbewegung versetzt.

3. Radialkolbenpumpe nach Anspruch 1 oder 2,
**dadurch gekennzeichnet, dass**
durch in den Kolben (17) der weiteren Kolbenreihe (15) ausgebildete Saugöffnungen (9) im Bereich eines unteren Totpunkts der Hubbewegung von dem Saugraum (10) Druckmittel in Zylinderräume (12) einströmt, und wobei das Druckmittel durch eine Bewegung der Kolben (17) zum oberen Totpunkt über Drucköffnungen (13) aus den Zylinderräumen (12) ausströmt.

4. Radialkolbenpumpe nach Anspruch 1, 2 oder 3
**dadurch gekennzeichnet, dass**
ein weiterer Druckausgang (21) in dem Gehäuse (3) ausgebildet ist und die Kolben (17) der weiteren Kolbenreihe (15) Druckmittel zu dem weiteren Druckausgang (21) fördern.

5. Radialkolbenpumpe nach Anspruch 4,
**dadurch gekennzeichnet, dass**
der Druckausgang (14) mit einem ersten Verbraucher (2) und der weitere Druckausgang (21) mit einem zweiten Verbraucher (22) verbunden ist, um Druckmittel von dem jeweiligen Druckausgang (14,21) zu dem verbundenen Verbraucher (2,22) zu fördern.

6. Radialkolbenpumpe nach Anspruch 4,
**dadurch gekennzeichnet, dass**
der Druckausgang (14) und der weitere Druckausgang (21) mit demselben Verbraucher (2) verbunden sind, um Druckmittel zu demselben Verbraucher (2) zu fördern.

7. Radialkolbenpumpe nach Anspruch 6,
**dadurch gekennzeichnet, dass**
eine Steuereinrichtung vorgesehen ist, um bedarfsweise Druckmittel von nur einem oder von beiden Druckausgängen (14,21) zu demselben Verbraucher (2) zu fördern.

8. Radialkolbenpumpe nach einem der Ansprüche 1 bis 7,
**dadurch gekennzeichnet, dass**
die Kolbenreihen (7,15) derart ausgebildet sind, dass sich das Volumen des Druckmittels, das die Kolbenreihe (7) bei einer Rotation der Exzenterwelle (8) fördert, von dem Volumen, das die weitere Kolbenreihe (15) fördert, unterscheidet und/oder die Radialkolbenpumpe (1) derart ausgebildet ist, dass der Druck des von der Kolbenreihe (7) stammenden Druckmittels unterschiedlich ist zu dem Druck des von der weiteren Kolbenreihe (15) stammenden Druckmittels.

9. Radialkolbenpumpe nach einem der Ansprüche 1 bis 8,
**dadurch gekennzeichnet, dass**
für jede der Kolbenreihen (7,15) ein eigener Gleitring (20) vorgesehen ist, wobei die Gleitringe (20) jeweils zwischen der Exzenterwelle (8) und der jeweiligen Kolbenreihe (7,15) angeordnet sind.

10. Radialkolbenpumpe nach Anspruch 9,
**dadurch gekennzeichnet, dass**
der Gleitring (20) der Kolbenreihe (7) eine von dem Gleitring (20) der weiteren Kolbenreihe (15) unterschiedliche Stärke in Radialrichtung aufweist.

11. Radialkolbenpumpe nach einem der Ansprüche 1 bis 10,
**dadurch gekennzeichnet, dass**
die Radialkolbenpumpe (1) als Notlenkpumpe für ein Fahrzeug, insbesondere ein Nutzfahrzeug, ausgebildet ist, wobei die Kolbenreihe (7) eingerichtet ist, um Druckmittel zu einem Radlenkgetriebe oder einem Lenkzylinder eines Lenksystems einer ersten Radachse zu fördern, und die weitere Kolbenreihe (15) eingerichtet ist, um Druckmittel zu einem Radlenkgetriebe oder einem Lenkzylinder eines Lenksystems einer zweiten Radachse zu fördern.

12. Verfahren zum Betrieb einer Radialkolbenpumpe (1) zur Förderung eines Druckmittels zu einem Verbraucher (2), wobei die Radialkolbenpumpe (1) ein Gehäuse (3) aufweist, in dem zu einer Längsachse (4) radial angeordnete Zylinderbohrungen (5) vorgesehen sind, in denen je ein radial verschiebbarer Kolben (6) angeordnet ist, wobei die Kolben (6) eine in einer Radialebene liegende Kolbenreihe (7) ausbilden, und wobei die Kolben (6) durch eine koaxial zu der Längsachse (4) angeordnete Exzenterwelle (8) in eine linear oszillierende Hubbewegung versetzt werden, und wobei durch Saugöffnungen (9) der Kolben (6) im Bereich eines unteren Totpunkts der Hubbewegung von einem Saugraum (10), welcher durch einen Sauganschluss (11) mit Druckmittel versorgt wird, durch einen Unterdruck, der aufgrund der Bewegung der Kolben (6) zum unteren Totpunkt entstanden ist, Druckmittel in Zylinderräume (12) einströmt, und wobei das Druckmittel bei der Bewegung der Kolben (6) zum oberen Totpunkt über Drucköffnungen (13) zu einem Druckausgang (14) gefördert wird,
**dadurch gekennzeichnet, dass**
planparallel zu der Kolbenreihe (7) wenigstens eine weitere Kolbenreihe (15) vorgesehen wird, und in dem Gehäuse (3) weitere Zylinderbohrungen (16) vorgesehen werden, in denen je ein Kolben (17) der weiteren Kolbenreihe (15) radial verschiebbar angeordnet wird, und die Kolben (17) der weiteren Kolbenreihe (15) durch die Exzenterwelle (8) in eine linear oszillierende Hubbewegung versetzt werden, wonach das von der Kolbenreihe (7) und der weiteren Kolbenreihe (15) geförderte Druckmittel demselben Verbraucher (2) zugeführt wird oder das von der Kolbenreihe (7) geförderte Druckmittel einem ersten Verbraucher (2) und das von der weiteren Kolbenreihe (15) geförderte Druckmittel einem zweiten Verbraucher (22) zugeführt wird.

13. Verfahren nach Anspruch 12,
**dadurch gekennzeichnet, dass**
bei einer Förderung des Druckmittels zu demselben Verbraucher (2) vorgesehen wird, dass dem Verbraucher (2) bedarfsweise nur das von der ersten Kolbenreihe (7) geförderte Druckmittel oder nur das von der weiteren Kolbenreihe (15) geförderte Druckmittel oder das von beiden Kolbenreihen (7,15) geförderte Druckmittel zugeführt wird.

14. Verfahren nach Anspruch 12 oder 13,
**dadurch gekennzeichnet, dass**
sich das Volumen des Druckmittels, das die Kolbenreihe (7) bei einer Rotation der Exzenterwelle (8) fördert, von dem Volumen, das die weitere Kolbenreihe (15) fördert, unterscheidet und/oder der Druck des von der Kolbenreihe (7) stammenden Druckmittels unterschiedlich ist zu dem Druck des von der weiteren Kolbenreihe (15) stammenden Druckmittels.

15. Verfahren nach Anspruch 12, 13 oder 14,
**dadurch gekennzeichnet, dass**
bei einem Betrieb der Radialkolbenpumpe (1) derart, dass das von der Kolbenreihe (7) geförderte Druckmittel einem ersten Verbraucher (2) und das von der weiteren Kolbenreihe (15) geförderte Druckmittel einem zweiten Verbraucher (22) zugeführt wird, vorgesehen wird, dass der erste Verbraucher (2) eine erste lenkbare Radachse und der zweite Verbraucher (22) eine zweite lenkbare Radachse eines Nutzfahrzeugs ist, wobei vorzugsweise vorgesehen wird, dass die Radialkolbenpumpe (1) als Notlenkpumpe ausgebildet wird, wobei der erste Verbraucher (2) ein Radlenkgetriebe oder ein Lenkzylinder einer Lenkvorrichtung der ersten Radachse ist und der zweite Verbraucher (22) ein Radlenkgetriebe oder ein Lenkzylinder einer Lenkvorrichtung der zweiten Radachse ist.

16. Lenksystem (24) für eine Fahrzeug, insbesondere für ein Nutzfahrzeug, mit wenigstens zwei lenkbaren Radachse die im Normalbetrieb jeweils mit einer elektrischen und/oder hydraulischen Lenkvorrichtung auslenkbar sind und mit zusätzlich einer Notlenkpumpe, welche als Radialkolbenpumpe (1) nach einem der Ansprüche 1 bis 11 ausgebildet ist oder die nach einem Verfahren gemäß einem der Ansprüche 12 bis 15 betreiben wird, wobei Druckleitungen vorgesehen sind, um ein von der Kolbenreihe (7) gefördertes Druckmittel einem Radlenkgetriebe oder einem Lenkzylinder einer Lenkvorrichtung der ersten Radachse zuzuführen und wobei weitere Druckleitungen vorgesehen sind, um ein von der weiteren Kolbenreihe (15) gefördertes Druckmittel einem Radlenkgetriebe oder einem Lenkzylinder einer Lenkvorrichtung der zweiten Radachse zuzuführen.
